# EUROPEAN PATENT APPLICATION

(11) **EP 3 566 994 A1**
(43) Date of publication of application: **13.11.2019**
(21) Application number: 18305583.9
(22) Date of filing: 11.05.2018
(51) Int. Cl.: B66B 5/22

(54) **ELEVATOR SAFETY BRAKE ASSEMBLY**

(71) Applicant: Otis Elevator Company, Farmington, Connecticut 06032 (US)
(72) Inventor: Fauconnet, Aurelien, Gien 45500 (FR); Rebillard, Pascal, Gien 45500 (FR)
(74) Representative: Schmitt-Nilson Schraud Waibel Wohlfrom Patentanwälte Partnerschaft mbB

(57) **Abstract**

Disclosed is a brake assembly for providing safety braking to an elevator, the elevator operably disposed against a guide rail, the brake assembly including: a housing including a cavity, the cavity slidingly containing at least one wedge including a first wedge, wherein the at least one wedge slides in the cavity between a first position and a second position, and in the first position the at least one wedge creates minimal frictional resistance to movement against the guide rail which extends through the cavity, and in the second position the at least one wedge frictionally engages the guide rail to resist movement.

## Description

Exemplary embodiments pertain to the art of brake assemblies and more specifically to an elevator brake assembly for providing safety braking to an elevator.

Electrical Safety Actuation (ESA) may be used to prevent free fall of an elevator. In addition, protection against excessive speed or during an unintended car movement (UCM) event may be provided by an elevator brake that relies on a friction factor between a sheave and coated steel belt (CSB). An alternative form of safety braking may be desired.

Disclosed is a brake assembly for providing safety braking to an elevator, the elevator operably disposed against a guide rail, the brake assembly including: a housing including a cavity, the cavity slidingly containing at least one wedge including a first wedge, wherein the at least one wedge slides in the cavity between a first position and a second position, and in the first position the at least one wedge creates minimal frictional resistance to movement against the guide rail which extends through the cavity, and in the second position the at least one wedge frictionally engages the guide rail to resist movement.

In addition to one or more of the above disclosed features or as an alternative the at least one wedge is urged toward the guide rail with at least one actuator, including a first actuator, and the at least one actuator being deposed in the housing and proximate the at least one wedge when the at least one wedge is in the first position.

In addition to one or more of the above disclosed features or as an alternative the at least one wedge comprises a plurality of wedges including the first wedge and a second wedge, the plurality of wedges being urged toward the guide rail with a respective plurality of actuators, including a first actuator and a second actuator, and each of the plurality of actuators being deposed in the housing and proximate one of the plurality of wedges when the plurality of wedges are in the first position.

In addition to one or more of the above disclosed features or as an alternative each wedge is a trapezoidal block, each wedge having one short base and one long base, each long base being positionally adjacent the guide rail.

In addition to one or more of the above disclosed features or as an alternative each actuator is housed in a respective cylindrical opening in the housing.

In addition to one or more of the above disclosed features or as an alternative at least one guide track in the cavity, including a first guide track, at least one boss, wherein each wedge includes one of the at least one boss, wherein one of the at least one boss extends into each guide track.

In addition to one or more of the above disclosed features or as an alternative the cavity has at least one side wall including a first side wall, each side wall being proximate each wedge, and a depth-wise profile shape of each side wall mirroring a profile shape of the proximate wedge to conformingly receive the proximate wedge, wherein each wedge slides against each proximate side wall when sliding between the first position and the second position.

In addition to one or more of the above disclosed features or as an alternative the brake assembly is symmetric about a center height-wise extending axis and a center widthwise extending axis.

In addition to one or more of the above disclosed features or as an alternative the actuator is a linear actuator, a hydraulic actuator, a pneumatic actuator, a servo motor actuator or an electromagnetic actuator.

Further disclosed is a method of operating a braking assembly to provide safety braking to an elevator, the elevator operably disposed against the guide rail, wherein the guide rail includes ore more of the above disclosed features.

The following descriptions should not be considered limiting in any way. With reference to the accompanying drawings, like elements are numbered alike:

FIGS. 1A-1C illustrate a brake assembly installed on an elevator according to an embodiment;

FIG. 2 is an exploded view of a brake assembly according to an embodiment; and

FIGS. 3A-3C illustrate different positions of a brake assembly according to an embodiment.

A detailed description of one or more embodiments of the disclosed apparatus and method are presented herein by way of exemplification and not limitation with reference to the Figures.

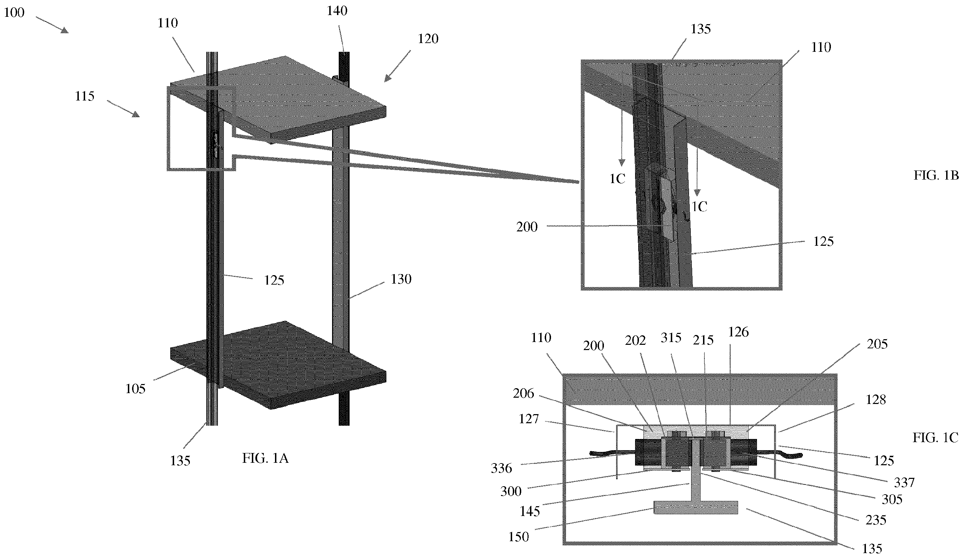

Turning to FIGS. 1A - 1C, disclosed is a schematic illustration of an elevator 100 having a floor 105, and a ceiling 110, a first side 115 an opposing second side 120. Extending between the floor 105 and the ceiling 110 is a first guide channel 125 on the first side 115, an opposing second guide channel 130 on the second side 120. The channels are identical so that the first channel 125 may alternatively be referred to as channel 125. As further illustrated in FIG. 1C, the channel 125 is a "C" channel with a base 126 connected to the elevator and a pair of flanges 127, 128 extending away from the elevator. While two guide channels 125 are recited above, it should appreciated that any number of guide channels 125 may be employed. Moreover, while a "C" shaped channel is disclosed, it should be appreciated that a "T" shaped channel or any other desired shape may be employed.

A first guide rail 135 is centrally disposed proximate the first guide channel 125 and a second guide rail 140 is centrally disposed within the second guide channel 130. The guide rails are identical so that the first guide rail 135 may be alternatively referred to as guide rail 135. As further illustrated in FIG. 1C, the guide rail 135 comprises a "T" shaped cross section, with a stem 145 extending toward the elevator 100 and a flange 150 is perpendicular to the stem 145. While two guide rails 140 are recited above, it should appreciated that any number of guide rails 140 may be employed. Moreover, while a "T" shaped channel is disclosed, it should be appreciated that a "C" shaped channel or any other desired shape may be employed.

With reference to FIGS. 1A-1C, 2 and 3A-C, a brake assembly 200 is disclosed for providing braking against the guide rail 135 for the elevator 100. The brake assembly 200 comprises a housing 202 having a first span in a longitudinal direction L, a second span in a transverse direction T, and a third span in a depth-wise direction D. As such, the housing 202 includes a longitudinal top 203 and a longitudinal bottom 204, a first transverse side 205 and a second transverse side 206, a depth-wise front face 207 and a depth-wise rear face 208.

The housing 202 has a cavity 210 extending depth-wise into the housing front face 207. The cavity has a longitudinal top portion 211, a longitudinal bottom portion 212, a first transverse side 213, an opposing second transverse side 214, and a depth-wise bottom surface 215.

The cavity 210 slidingly contains a plurality of wedges including a first wedge 216 and a transversely opposing second wedge 220. The plurality of wedges have a corresponding plurality of longitudinal top portions including a first top portion 221 and a second top portion 222. In addition, the plurality of wedges have a corresponding plurality of longitudinal bottom portions including a first bottom portion 223 and a second bottom portion 224. The plurality of wedges have a corresponding plurality of longitudinal faces including a first longitudinal face 225 in the first wedge 216 and a second longitudinal face 226 in the second wedge 220. The plurality of longitudinal faces are transversely adjacent in the cavity 210. In one embodiment, a single wedge 216 may be employed. In one embodiment the wedge 216 or wedges 216 and 220 may be a two piece construction divided along a horizontal plane of each wedge.

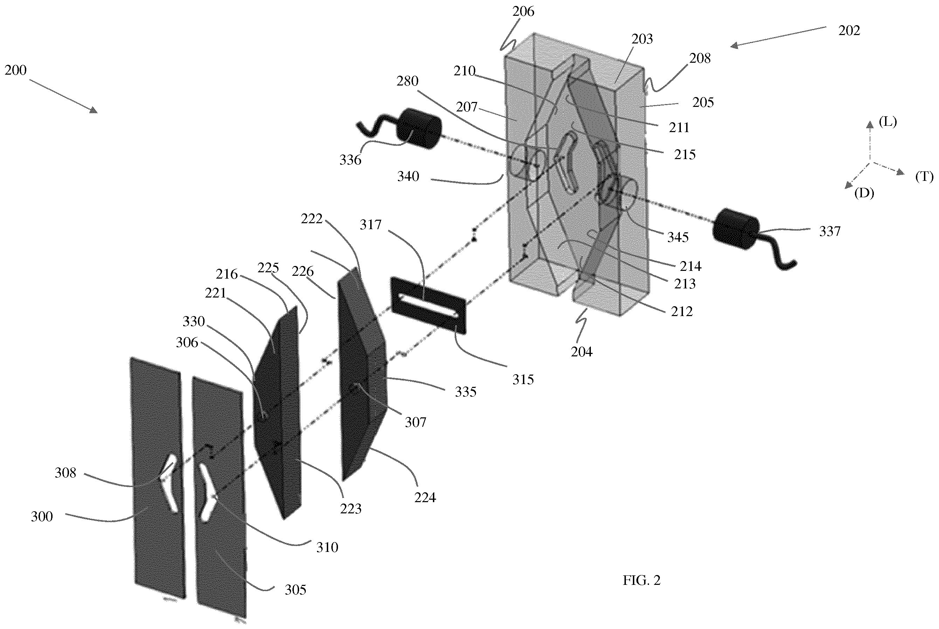

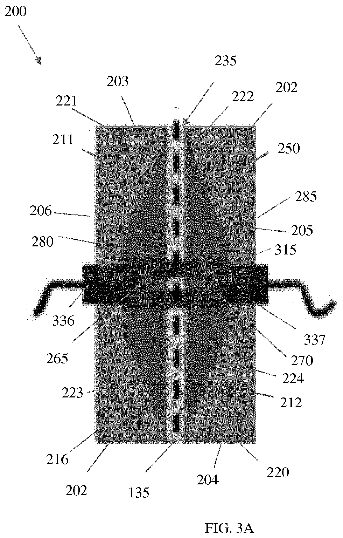

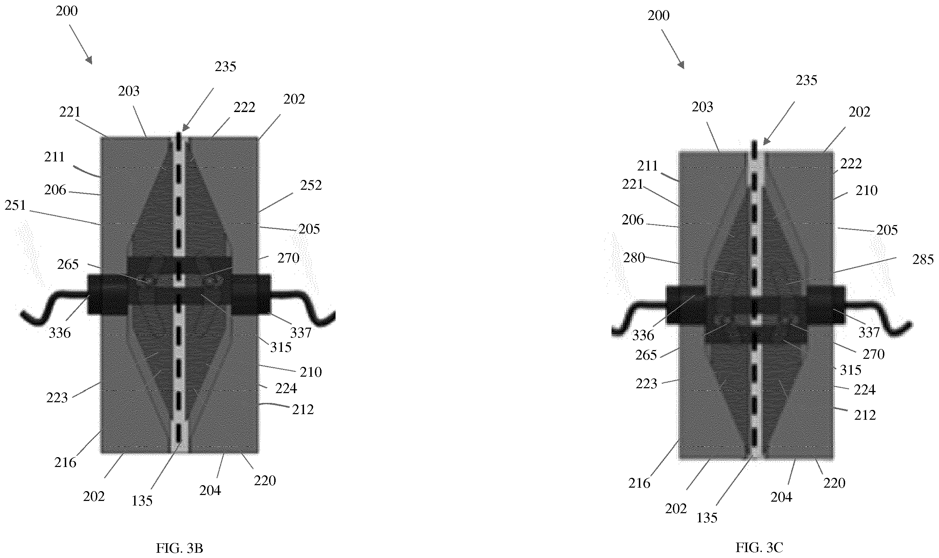

With reference now to FIGS. 2 and 3A-3C, the plurality of wedges slide in the cavity 210 between a plurality of positions including a first position (FIG. 3A), a second position (FIG. 3B) and a third position (FIG. 3C). In the first position the plurality of wedges are transversely distal to each other to form a passage 235 therebetween (also illustrated in FIG. 1C). The passage 235 extends longitudinally through the opposing longitudinal top and bottom ends 203, 204 of the housing 202, through which the guide rail 135 is capable of sliding in the longitudinal direction. This position is obtained when the elevator is not in a brake condition. For example, this position is utilized when the elevator is traveling between floors. In this position, a gap is left between the plurality of wedges and the guide rail 135. In one embodiment, the plurality of wedges and the guide rail 135 may be in contact while in the first position. However, such contact is minimal and produces minimal frictional resistance to movement of the elevator 100.

In the second position the plurality of wedges are transversely proximate each other to frictionally engage the guide rail 135 therebetween. In addition, the top portions the plurality of wedges are disposed at the top portion 211 of the cavity 210, discussed in more detail below. When in the second position, the plurality of wedges resist and/or prevent movement of the elevator 100 in a downward direction. In the third position the plurality of wedges are also transversely proximate each other to frictionally engage the guide rail 135 therebetween. In addition, in the third position the plurality of wedges are disposed at the bottom portion 212 of the cavity 210, discussed in more detail below. When in the third position, the plurality of wedges resist and/or prevent movement of the elevator 100 in an upward direction.

As illustrated in FIG. 3A, the top portion 211 of the cavity 210 converges toward the top 203 of the housing at a first convergence angle 250. In addition, the plurality of top portions of the wedges conform to the shape of the top portion of the cavity 210. As a result the plurality of top portions of the wedges remain disposed against the top portion 211 of the cavity during relative motion from the first position to the second position. From this configuration, the top portion 211 of the cavity urges the plurality of wedges against each other to tighten a frictional clamping action of the wedges against the guide rail 135.

As illustrated in FIGS. 3A-3C, the plurality of wedges have a corresponding first plurality of bosses including a first boss 265 and a second boss 270. The cavity 210 has a rear surface 275 with a corresponding first plurality of guide tracks including a first guide track 280 and a second guide track 285. The first plurality of guide tracks are angularly configured to converge toward the top of the housing 202 at the first convergence angle 240. The first plurality of guide tracks receive the corresponding first plurality of bosses and assist in maintaining alignment of the plurality of wedges as the wedges move from the first position to the second position.

As illustrated in FIG. 1C and 2, the assembly further includes plurality of front surfaces including a first front surface 300 and a second front surface 305 disposed at the front of the housing 202. The plurality of front surface are rectangular, transversely adjacent and spaced about the passage 235. The plurality of front surfaces fix the plurality of wedges in the cavity 210. In one embodiment the plurality of front surfaces are plates.

As illustrated in FIG. 2, the plurality of wedges have a corresponding second plurality of bosses including a third boss 306 and a fourth boss 307. The plurality of front surfaces have a corresponding second plurality of guide tracks including a third guide track 308 and a fourth guide track 310. The second plurality of guide tracks are longitudinally and transversely aligned with the first plurality of guide tracks and receive the second plurality of bosses. As with the first plurality of guide tracks, the second plurality of guide tracks assist in maintaining alignment of the plurality of wedges as the plurality of wedges move from the first position to the second position.

As illustrated in FIGS. 1C, 2 and 3A-3C, the brake assembly includes a slotted surface 315. The slotted surface 315 is slidably disposed between the plurality of wedges and the back surface 212 of the cavity 210. The slotted surface 315 has a transversely extending slot 317 (identified in FIG. 2). The first plurality of bosses extend from the plurality of wedges, through the slot 317 and into the first plurality of guide tracks. The slotted member 315 provides for synchronized sliding moment of the plurality wedges provides within the cavity 210.

In one embodiment the brake assembly 200 is symmetric about the longitudinal axis and the transverse axis. As a result the brake assembly 200 may limit unintended downward motion (FIG. 2B) of the elevator as well as unintended upward motion (FIG. 2C) of the elevator. In addition, this configuration assures that the brake assembly 200 is usable even if installed in an inverted configuration.

The plurality of wedges may be identical isosceles trapezoidal blocks, wherein the transversely adjacent surfaces 225, 226 form respective first and second long bases. The plurality of wedges include a corresponding plurality of short bases including a first short base 330 and a second short base 335 (FIG. 2). The plurality of short bases face transversely face away from each other in the cavity 210.

As illustrated in FIGS. 1C, 2 and 3A-3C, the plurality of wedges are urged in the transverse direction with a corresponding plurality of motion actuators, including a first actuator 336 and a second actuator 337. Each of the plurality of motion actuators is deposed in the housing 202, proximate one of the corresponding plurality of wedges when the plurality of wedges are in the first position. In the disclosed embodiments each motion actuator is an electromagnet. In one embodiment, the actuator may be a linear actuator, hydraulic, pneumatic, a servo motor, or any other known type of actuator.

When the plurality of motion actuators are charged as illustrated in FIGS. 3B and 3C, the plurality of wedges are transversely biased towards each other. At this point the longitudinal faces of the wedges will frictionally contact the guide rail 135. As the elevator moves unintentionally downwardly (FIG. 2B) or upwardly (FIG. 2C), the plurality of wedges will be dragged in the opposing direction by the guide rail 135, until the wedges are wedges between the respective converging surfaces in the cavity 210. This configuration will resist further relative motion between the wedges and the guide rail 135, and the elevator will stop.

As illustrated in FIG. 2, a plurality of orifices in the housing 202 including a first orifice 340 and a second orifice 345 are also provided. The plurality of orifices are transversely proximate the plurality of short bases of the plurality of wedges and disposed at the longitudinal center of the cavity 210. The plurality of orifices receive and maintain the position of the plurality of electromagnets.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A brake assembly for providing safety braking to an elevator, the elevator operably disposed against a guide rail, the brake assembly comprising:
a housing including a cavity, the cavity slidingly containing at least one wedge including a first wedge,
wherein the at least one wedge slides in the cavity between a first position and a second position, and
in the first position the at least one wedge creates minimal frictional resistance to movement against the guide rail which extends through the cavity, and
in the second position the at least one wedge frictionally engages the guide rail to resist movement.

2. The brake assembly of claim 1, wherein
the at least one wedge is urged toward the guide rail with at least one actuator, including a first actuator, and
the at least one actuator being deposed in the housing and proximate the at least one wedge when the at least one wedge is in the first position.

3. The brake assembly of claim 1 or 2, wherein
the at least one wedge comprises a plurality of wedges including the first wedge and a second wedge,
the plurality of wedges being urged toward the guide rail with a respective plurality of actuators, including a first actuator and a second actuator, and
each of the plurality of actuators being deposed in the housing and proximate one of the plurality of wedges when the plurality of wedges are in the first position.

4. The brake assembly of any of claims 1 to 3, wherein
each wedge is a trapezoidal block, each wedge having one short base and one long base, each long base being positionally adjacent the guide rail.

5. The brake assembly of claim 3 or 4, wherein
each actuator is housed in a respective cylindrical opening in the housing; and/or wherein the brake assembly further comprises
at least one guide track in the cavity, including a first guide track,
at least one boss, wherein each wedge includes one of the at least one boss, wherein one of the at least one boss extends into each guide track.

6. The brake assembly of any of claims 3 to 5, wherein
the cavity has at least one side wall including a first side wall,
each side wall being proximate each wedge, and
a depth-wise profile shape of each side wall mirroring a profile shape of the proximate wedge to conformingly receive the proximate wedge,
wherein each wedge slides against each proximate side wall when sliding between the first position and the second position.

7. The brake assembly of any of claims 3 to 6, wherein the brake assembly is symmetric about a center height-wise extending axis and a center widthwise extending axis; and/or wherein the actuator is a linear actuator, a hydraulic actuator, a pneumatic actuator, a servo motor actuator or an electromagnetic actuator.

8. A method of operating a braking assembly to provide safety braking to an elevator, the elevator operably disposed against a guide rail,
wherein the brake assembly includes:
a housing including a cavity, the cavity slidingly containing at least one wedge including a first wedge,
the method comprising
sliding the at least one wedge between a first position and a second position, and
wherein
in the first position the at least one wedge creates minimal frictional resistance to movement against the guide rail which extends through the cavity, and
in the second position the at least one wedge frictionally engages the guide rail to resist movement.

9. The method of claim 8, wherein
the at least one wedge is urged toward the guide rail with at least one actuator, including a first actuator, and
the at least one actuator being deposed in the housing and proximate the at least one wedge when the at least one wedge is in the first position.

10. The method of claim 8 or 9, wherein
the at least one wedge comprises a plurality of wedges including the first wedge and a second wedge,
the plurality of wedges being urged toward the guide rail with a respective plurality of actuators, including a first actuator and a second actuator, and
each of the plurality of actuators being deposed in the housing and proximate one of the plurality of wedges when the plurality of wedges are in the first position.

11. The method of any of claims 8 to 10, wherein
each wedge is a trapezoidal block, each wedge having one short base and one long base, each long base being positionally adjacent the guide rail.

12. The method of claim 10 or 11; wherein
each actuator is housed in a respective cylindrical opening in the housing.

13. The method of any of claims 8 to 12, comprising
at least one guide track in the cavity, including a first guide track,
at least one boss, wherein each wedge includes one of the at least one boss, wherein one of the at least one boss extends into each guide track.

14. The method of any of claim 10 to 13, wherein
the cavity has at least one side wall including a first side wall,
each side wall being proximate each wedge, and
a depth-wise profile shape of each side wall mirroring a profile shape of the proximate wedge to conformingly receive the proximate wedge,
wherein each wedge slides against each proximate side wall when sliding between the first position and the second position.

15. The method of any of claims 10 to 14, wherein
the brake assembly is symmetric about a center height-wise extending axis and a center widthwise extending axis, and/or
wherein the actuator is a linear actuator, a hydraulic actuator, a pneumatic actuator, a servo motor actuator or an electromagnetic actuator.
